(19) **Europäisches Patentamt**

**European Patent Office**

**Office européen des brevets**

(11) Veröffentlichungsnummer: **0 210 322**
**A1**

(12) **EUROPÄISCHE PATENTANMELDUNG**

(21) Anmeldenummer: 86100480.2

(22) Anmeldetag: 16.01.86

(51) Int. Cl.⁴: **B60K 15/04**

(30) Priorität: 01.08.85 DE 8522203 U

(43) Veröffentlichungstag der Anmeldung:
04.02.87 Patentblatt 87/06

(84) Benannte Vertragsstaaten:
AT BE CH DE FR GB IT LI LU NL SE

(71) Anmelder: **Rhein-Conti Kunststoff-Technik GmbH**
**Bergstrasse 116**
**D-6900 Heidelberg 1(DE)**

(72) Erfinder: **Eichelberger, Gerhard**
**Waghäuseler Strasse 24**
**D-6823 Neulussheim(DE)**

(74) Vertreter: **Ratzel, Gerhard, Dr.**
**Seckenheimer Strasse 36a**
**D-6800 Mannheim 1(DE)**

(54) **Tankstutzen.**

㊿ Die Erfindung betrifft einen Tankstutzen für einen aus Kunststoff bestehenden Kraftstofftank (10) mit einer daran befestigten Metallhülse (14), auf die ein Tankdeckel (18) aufsetzbar ist, wobei erfindungsgemäß die Metallhülse (14) mit einem hohlzylindrischen Ansatz (12) des Tanks (10) in einer formschlüssigen Verbindung steht, die mittels eines zwischen Metallhülse (14) und Ansatz (12) eingespannten Dichtrings (24), der vorzugsweise ein O-Ring ist, abgedichtet ist.

EP 0 210 322 A1

Figur 1

## Tankstutzen

Die Erfindung betrifft einen Tankstutzen für einen aus Kunststoff bestehenden Kraftstofftank mit einer daran befestigten Metallhülse, auf die ein Tankdeckel aufsetzbar ist.

Kunststofftanks mit einer Metallhülse am Tankstutzen sind für Kraftfahrzeuge allgemein bekannt. Sie werden üblicherweise mit einem Tankdeckel verschlossen, der einen an der Metallhülse angreifenden Bajonettverschluß hat.

Es fehlt aber bislang an einer in jeder Beziehung befriedigenden Verbindung zwischen der Metallhülse und dem Kunststofftank.

Aufgabe der Erfindung ist es, eine konstruktiv unaufwendige, montagetechnisch günstige und einwandfrei dichte Verbindung zwischen Metallhülse und Kunststofftank zu schaffen.

Diese Aufgabe wird dadurch gelöst, daß die Metallhülse mit einem hohlzylindrischen Ansatz des Tanks in einer formschlüssigen Verbindung steht, die mittels eines zwischen Metallhülse und Ansatz eingespannten Dichtrings abgedichtet ist.

Die erfindungsgemäße Vewendung eines Dichtrings schafft ein besonders hohes Maß an Dichtsicherheit. Besonders geeignet ist ein O-Ring.

Der Dichtring kann in einer Nut des Kunststoffansatzes einsitzen. Die Nut kann insbesondere auf dem Umfang des Ansatzes ausgenommen sein und beispielsweise einen rechteckigen Querschnitt haben. Doch ist es auch möglich, die Nut radial innen oder außen an der Stirnfläche des Kunststoffansatzes vorzusehen.

Man kann aber auch an der Metallhülse eine umlaufende Einbuchtung oder Ausbuchtung vorsehen, in der der Dichtring sitzt.

Die Verbindung zwischen Metallhülse und Tankansatz kann lösbar oder unlösbar sein. Mit einer unlösbaren Verbindung stellt man in einfacher Weise eine einwandfreie Dichtigkeit sicher. Die lösbare Verbindung hat den Vorteil, daß man die Metallhülse wechseln kann, beispielsweise um einen Umbau zwischen verschiedenen Tankverschluß-Bauformen vorzu nehmen. Das kann für Kraftfahrzeuge von Bedeutung sein,die für den Export bestimmt sind.

Die Metallhülse kann mit einer oder mehreren Halteschrauben an dem Kunststoffansatz festgeschraubt sein. Auch kann man die Metallhülse als Gewindestutzen ausbilden, so daß sie sich mit einem Gewindeansatz des Kunststofftanks verschrauben läßt. Diese Verbindungen sind jeweils lösbar. Eine unlösbare Verbindung kann darin bestehen, daß man die Metallhülse an dem Kunstofansatz festklemmt oder festbördelt.

Die Metallhülse kann mit einem radial nach innen oder außen vorstehenden, vorzugsweise ebenfalls aus Metall bestehenden Kragen starr verbunden sein. Ein solcher Kragen kann als Anschlag dienen, der die Aufschubtiefe oder Einstecktiefe der Metallhülse an dem Kunststoffansatz begrenzt. Weiterhin ist er als Dichtfläche für den Dichtring ausgezeichnet geeignet. Der Kragen kann insbesondere mit der Metallhülse verlötet oder verschweißt sein.

In einer bevorzugten Ausführungsform ist das freie Ende der Metallhülse für einen Bajonnet-Tankverschluß insbesondere nach DIN 73400 ausgelegt.

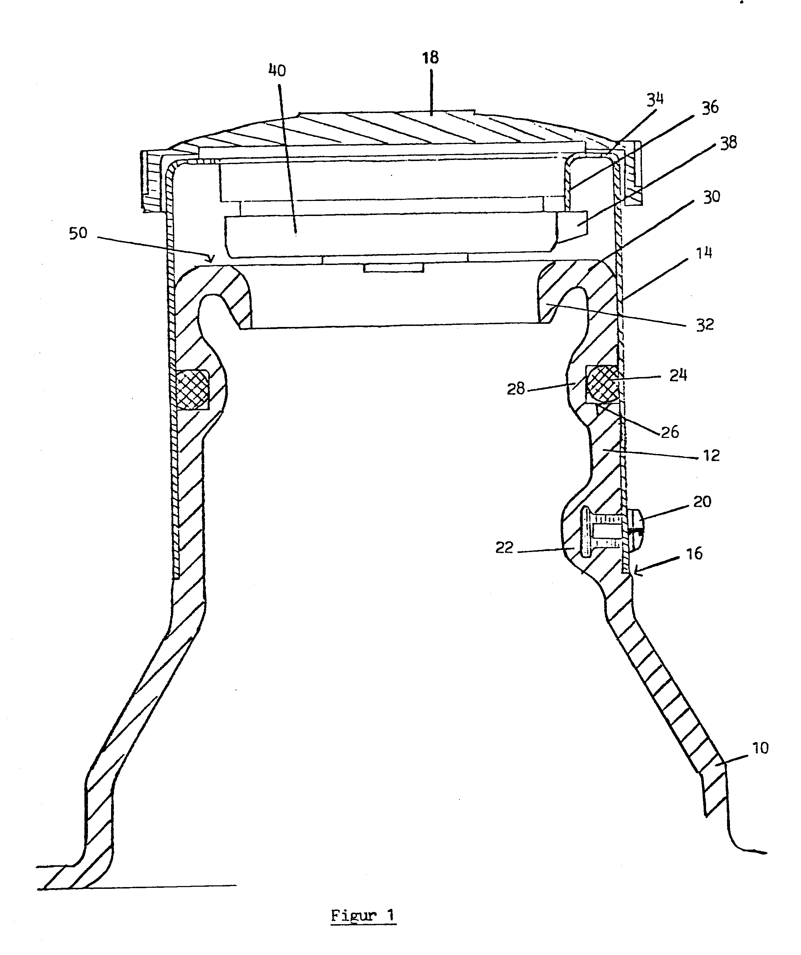

Die Erfindung wird im folgenden anhand von 9 Ausführungsbeispielen erläutert, die in je einer Abbildung dargestellt sind. Die entsprechenden Zeichnungen Fig. 1 bis Fig. 9 zeigen Längsschnitte durch Tankverschlüsse, wobei teilweise nur eine Halbseite des Tanverschlusses dargestellt ist.

Fig. 1 zeigt den Füllstutzen eines Tanks 10, der aus Kunststoff besteht. Der Tank 10 hat einen einstückig daran angeformten, halsartigen Ansatz 12 von im wesentlichen kreiszylindrischer Form. Unterhalb des Ansatzes 12 erweitert sich der Tank 10 konisch. Der Ansatz 12 ist im Außendurchmesser abgestuft, wobei sein freies Ende kleineren Durchmesser aufweist. Auf den Ansatz ist radial außen eine Metallhülse 14 aufgesteckt, deren Aufschubtiefe durch die Stufe 16 begrenzt wird. Das Außenmaß des Tanks 10 und das der Metallhülse 10 gehen praktisch stufenlos ineinander über. Ein freies Ende der Metallhülse 14 ragt über den Ansatz 12 hinaus und dient zur Festlegung eines Tankdeckels 18.

Die Metallhülse 14 wird in ihrer Baustellung auf dem Ansatz 12 mit einer Halteschraube 20 fixiert. Diese greift radial durch eine Montagebohrung der Metallhülse 14 hindurch, und sie wird mit dem Ansatz 12 verschraubt, der zu diesem Zweck mit einer radialen Gewindebohrung versehen sein kann. Gegebenenfalls kann auch eine selbstschneidende Halteschraube 20 Verwendung finden. Der Ansatz 12 weist in der Umgebung der Halteschraube 20 eine Materialverstärkung auf, und zwar in Form eines abgerundeten, in das Stutzen-Innere ragenden Buckels 22. Bei Verwendung einer selbstschneidenden Schraube empfiehlt es sich, diesen Montagepunkt auf dem Außenmantel des Kunststoffansatzes 12 kenntlich zu machen.

Die Verbindung zwischen Ansatz 12 und Metallhülse 14 ist mündungsseitig von der Halteschraube 20 gedichtet. Hierzu dient ein Dichtring 24, der die Form eines O-Rings hat. Der Dichtring 24 sitzt in einer umlaufenden Ringnut 26, die auf dem Außenmantel des Ansatzes 12 ausgenommen ist. Die Ringnut 26 hat im wesentlichen rechteckigen Querschnitt. Der Ansatz 12 weist auf der Höhe der Ringnut 26 eine umlaufende Materialverstärkung in Form eines abgerundeten, in das Innere des Ansatzes 12 vorspringenden Wulstes auf. Ringnut 26 und Dichtring 24 sind so dimensioniert, daß der Dichtring 24 bei aufgeschobener Metallhülse 14 gepreßt wird, so daß er die Verbindung zwischen Ansatz 12 und Metallhülse 14 abdichtet.

Der mündungsseitige obere Rand des Ansatzes 12 ist unter Bildung eines stirnseitigen Außenrings 30 radial nach innen abgewinkelt und kragenförmig 32 in das Innere des Tanks 10 gezogen. Man erhält so eine Einfüllöffnung kleineren Durchmessers mit sehr stabiler Umrandung.

Das über den Ansatz 12 hinausragende Ende der Metallhülse 14 dient als Verankerungsende für einen Bajonettverschluß an dem Tankdeckel 18. Das Ende der Metallhülse 14 ist dazu unter Bildung eines stirnseitigen Außenrings 34 radial nach innen gezogen und abgewinkelt, so daß ein koaxial zu dem Außenmantel der Metallhülse 14 verlaufender, zum Tank-Innern hin weisender Kragen 36 entsteht. Dieser wird von Bajonettnasen 38 untergriffen, die radial nach außen weisend an eine stopfenförmige Partie des Tankdeckels 18 angeformt sind. Letztere greift in den Kragen 36 ein, wodurch eine Führung bei Drehung des Tankdeckels 18 hergestellt wird. Der Tankdeckel 18 läßt sich zwischen einer Verriegelungsstellung, in der er bündig auf dem Außenring 34 der Metallhülse 14 aufsitzt, und einer Entriegelungsstellung verdrehen, in der die Bajonettnasen 38 von dem Kragen 36 freikommen, so daß sich der Tankdeckel 18 abheben läßt.

Der Tankdeckel 18 übergreift das umgestülpte Ende der Metallhülse 14 von oben und radial außen. Der Außenring 34 der Metallhülse 14 bildet eine Dichtfläche, an der ein entsprechend elastischer Teil des Tankdeckels 18 dichtend zur Anlage kommt. Zur Abdichtung des Tankdeckels 18 auf der Metallhülse 14 sind aber auch andere Bauformen denkbar; insbesondere kann in den Tankdeckel 18 ein Dichtring eingelegt sein, der von dem Außenmantel oder stirnseitigen Außenring der Metallhülse 14 beaufschlagt wird. Nicht zuletzt kann auch die stopfenförmige Partie 40 des Tankdeckels 18 dichtend mit dem Kragen 36 Metallhülse 14 zusammenwirken.

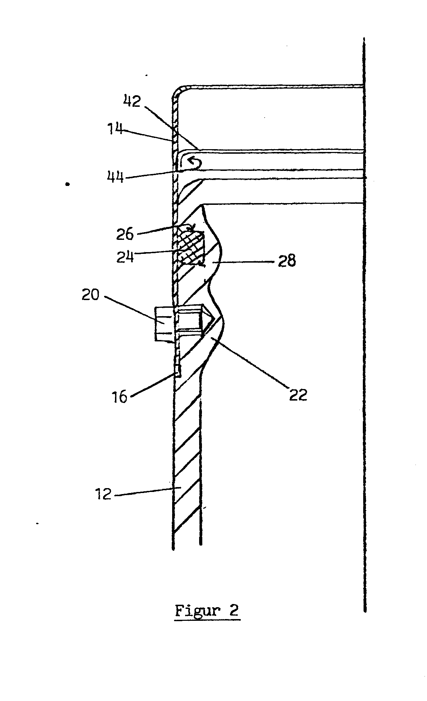

Fig. 2 zeigt eine abgewandelte Bauform mit einer anderen Form der Verankerung für den Tankdeckel 18. Zu dieser gehört ein oberhalb des Kunststoffansatzes 12 an der Metallhülse 14 ansetzender, radial nach innen ragender Steg 42. Der Steg 42 hat einen abgewinkelten Montageabschnitt 44, der mit der Innenwand der Metallhülse 14 in Anlage steht und mit dieser insbesondere verlötet oder verschweißt sein kann.

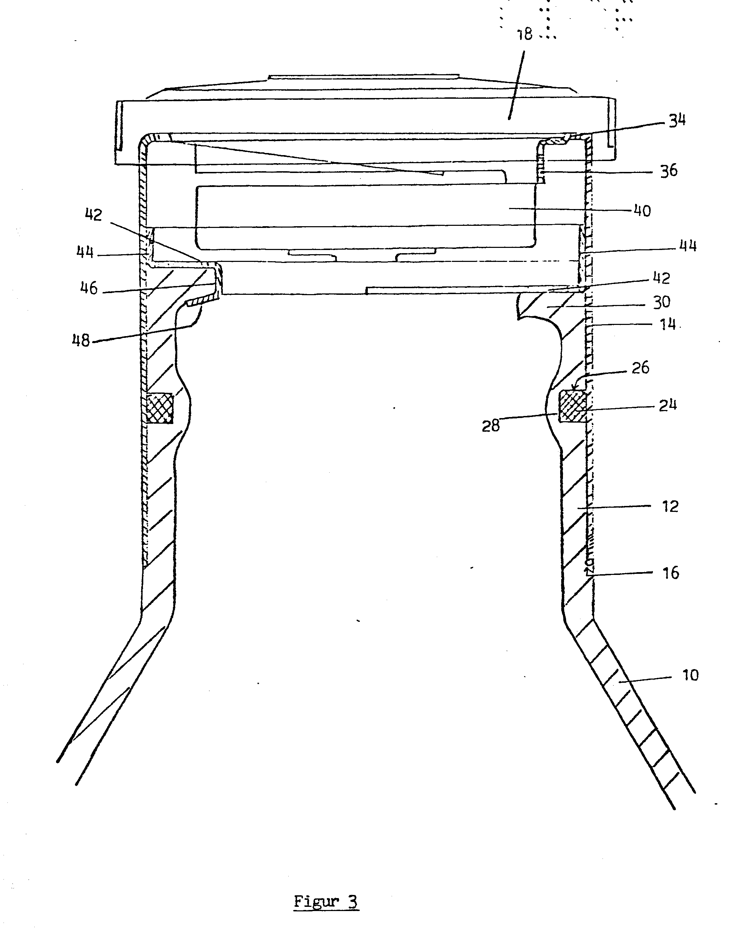

Fig. 3 zeigt, wie ein solcher Steg 42 zur Halterung der Metallhülse 14 auf dem Ansatz 12 verwendet werden kann. Der radiale Steg 42 steht hier mit der Stirnfläche des Kunststoffansatzes 12 in Anlage. Die Oberkante 46 des Ansatzes ist radial nach innen gezogen, und ein Abschnitt 48 des Stegs 42 ist so um die Oberkante 46 herumgebördelt, daß die Metallhülse 14 in Axialrichtung fest auf dem Ansatz 12 sitzt. Diese Bördelbefestigung stellt eine Alternative zu der Verschraubung der Metallhülse 14 dar, die in Fig. 1 und 2 illustriert ist.

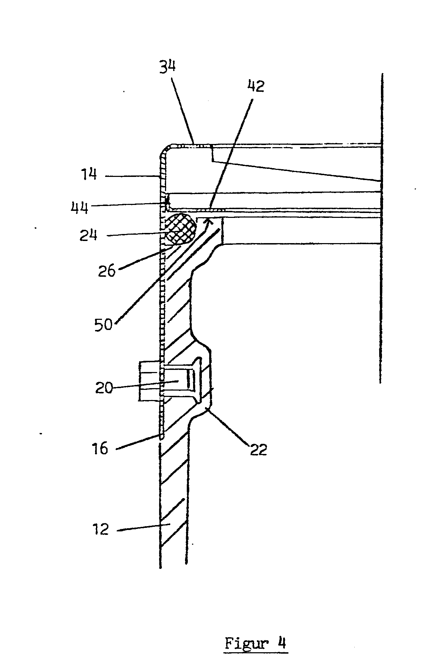

In der Variante gemäß Fig. 4 ist der Dichtring 24 in einer Nut des Kunststoffansatzes 12 aufgenommen, die sich stirnseitig an der radialen Außenseite des Ansatzes 12 befindet. Der Dichtring 44 steht geringfügig über die Stirnfläche 50 des Ansatzes 12 vor. Der radial nach innen ragende Steg 42 an der Metallhülse 14 ist so befestigt, daß er im montierten Zustand den Dichtring 24 preßt. Er kommt dabei dicht vor der Stirnfläche 50 des Ansatzes 12 zu liegen. Die Befestigung der Metallhülse 14 auf dem Ansatz 12 erfolgt wiederum mittels einer radialen Halteschraube 20.

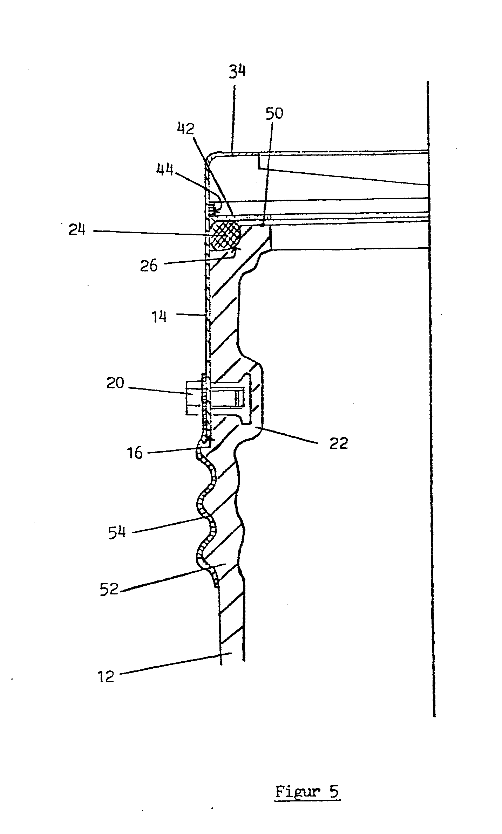

Gemäß Fig. 5 ist der Tankverschluß insofern abgewandelt, als sich an dem Kunststoffansatz 12 ein Außengewinde 52 befindet. Dieses hat die Form eines Rundgewindes. Die Metallhülse 14 weist in axialer Verlängerung einen Gewindestutzen 54 auf, der über das Außengewinde 52 paßt. Bei der Montage wird die Metallhülse 14 auf den Kunststoffansatz 12 aufgeschraubt, bis die in Fig. 5 gezeigte Baustellung erreicht ist, in der der stirnseitig angebrachte Dichtring 24 an dem radialen Steg 42 dichtet. Sodann wird die radiale Halteschraube 20 angebracht, um die Metallhülse 14 zu fixieren.

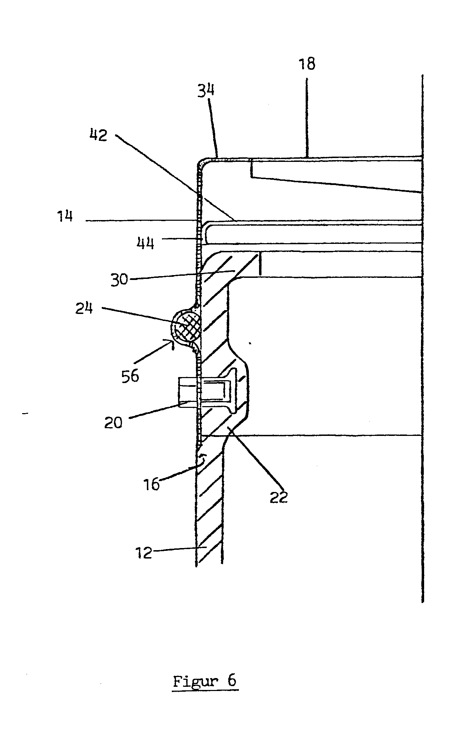

Bei allen bislang beschriebenen Beispielen ist der Dichtring 24 in einer Nut des Kunststoffansatzes 12 sitzend. Wie Fig. 6 zeigt, kann aber auch die Metallhülse 14 mit einer radialen Ausbuchtung versehen sein, in der der Dichtring 24 sitzt. Die Ausbuchtung 56 hat ein abgerundetes, an den Querschnitt des Dichtrings 24 angepaßtes Profil. Die Fixierung der Metallhülse 14 erfolgt wiederum mittels einer radialen Halteschraube 20.

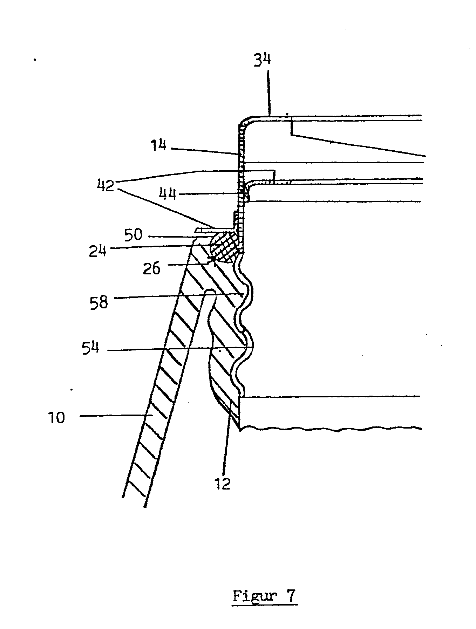

In allen bisher beschriebenen Varianten übergreift die Metallhülse 14 den Kunststoffansatz 12 radial außen.Wie im folgenden anhand von Fig. 7 bis 9 gezeigt, kann die Metallhülse 14 aber auch in der Öffnung eines an den Tank 10 angeformten Kunststoffansatzes aufgenommen sein und mit dem Innenmantel des Ansatzes 12 in Anlage stehen.

Gemäß Fig. 7 ist der Kunststoffansatz 12 am Ende einer konischen Partie des Tanks 10 nach innen gestülpt. Er weist auf seinem Innenmantel ein Innengewinde 58 auf, das als Rundgewinde ausgebildet ist. Die Metallhülse 14 hat an ihrem in den Ansatz 12 eingreifenden Ende ein passendes Außengewinde; wie in Fig. 7 gezeigt, kann die Metallhülse dazu insgesamt in Form einer Rundgewindewelle geprägt sein. Der Dichtring 24 ist in einer Ringnut aufgenommen, die sich an der Stirnseite des Kunststoffansatzes 14 befindet, und zwar an seinem radial inneren Rand. Der Dichtring 24 steht geringfügig über die Stirnfläche 50 des Ansatzes 12 vor. Radial außen an der Metallhülse 14 setzt ein Steg 42 an, der insbesondere ebenfalls aus Metall bestehen und mit der Metallhülse verlötet oder verschweißt sein kann. Ein Montageabschnitt 44 des Stegs 42 steht mit dem Außenmantel der Metallhülse 14 in Anlage, und eine davon abgewinkelte Partie des Stegs 42 ragt radial nach außen. Letztere beaufschlagt bei eingeschraubter Metallhülse 14 den Dichtring 24, so daß dieser abdichtend gepreßt wird. Der äußere Rand des Stegs 42 schließt mit der konischen Wand des Stegs 10 mehr oder weniger auf gleicher Höhe ab.

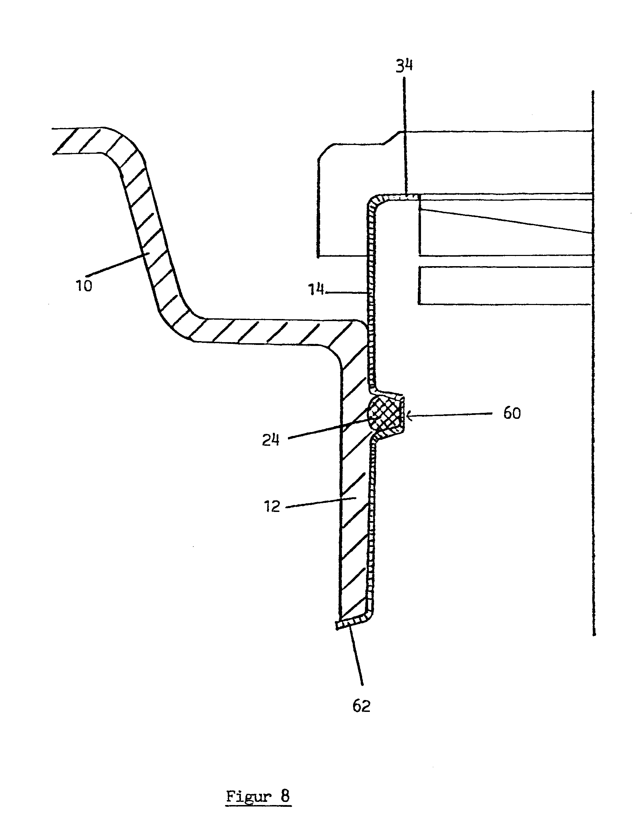

Bei der Variante gemäß Fig. 8 hat der Tank 10 einen glatten, nach innen gezogenen Kunststoffansatz 12. In diesen greift formschlüssig eine ebenfalls glatte Metallhülse 14 ein. Der Dichtring 24 ist in einer umlaufenden radialen Einbuchtung 60 der Metallhülse 14 aufgenommen. Die Einbuchtung 60 hat einen trapezförmigen Querschnitt. Die Metallhülse 14 steht zum Tank-Innern hin über den Ansatz 12 hinaus, und ihr unterer Rand ist radial nach außen abgebogen, so daß er die Stirnfläche des Kunststoffansatzes 12 untergreift. Die Metallhülse 14 wird so gegen ein Herausziehen aus dem Ansatz 12 gesichert.

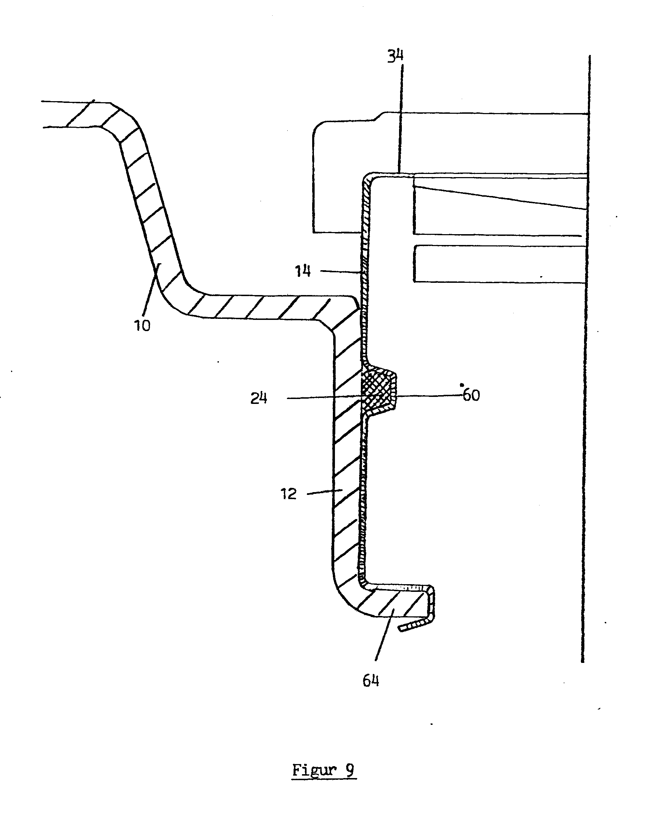

Bei der in Fig. 9 gezeigten Variante ist die Verbindung zwischen Kunststoffansatz 12 und Metallhülse 14 abgewandelt. Der Ansatz 12 hat einen flanschartig radial nach innen ragenden Randsteg 64. Das untere Ende der in den Ansatz 12 eingreifenden Metallhülse 14 ist um den Randsteg 64 herumgebördelt, wodurch die Metallhülse 14 in Axialrichtung an dem Ansatz 12 festliegt.

Die Erfindung ist nicht auf die in den Zeichnungen dargestellten Ausführungsbeispiele beschränkt. Insbesondere versteht sich, daß die Relativlage von Kunststoffansatz 12 und Metallhülse 14 radial innen oder außen, die Aufnahme des Dichtrings 24 in einer Nut 26 des Ansatzes 12 oder Einbuchtung 60 oder Ausbuchtung 56 der Metallhülse 14 sowie die Verbindung zwischen Ansatz 12 und Metallhülse 14 durch Verschraubung, Klemmung oder Bördelung zwischen den Ausführungsbeispielen jeweils austauschbar sind.

Liste der Bezugszeichen

10 Tank
12 Ansatz
14 Metallhülse
16 Stufe
18 Tankdeckel
20 Halteschraube
22 Materialverstärkung
24 Dichtring
26 Ringnut
28 Materialverstärkung
30 Außenring von 12
32 Kragen von 12
34 Außenring von 14
36 Kragen von 14
38 Bajonettnase
40 Stopfenpartie
42 Steg
44 Montageabschnitt
46 Oberkante
48 Abschnitt von 42
50 Stirnfläche
52 Außengewinde
54 Gewindestutzen
56 Ausbuchtung
58 Innengewinde
60 Einbuchtung
62 abgebogener Rand
64 Randsteg

## Ansprüche

1. Tankstutzen für einen aus Kunststoff bestehenden Kraftstofftank mit einer daran befestigten Metallhülse, auf die ein Tankdeckel aufsetzbar ist, dadurch gekennzeichnet, daß die Metallhülse (14) mit einem hohlzylindrischen Ansatz (12) des Tanks (10) in einer formschlüssigen Verbindung steht, die mittels eines zwischen Metallhülse (14) und Ansatz (12) eingespannten Dichtrings (24) abgedichtet ist.

2. Tankstutzen nach Anspruch 1, dadurch gekennzeichnet, daß der Dichtring (24) ein O-Ring ist.

3. Tankstutzen nach Anspruch 1 oder 2, dadurch gekennzeichnet, daß der Dichtring (24) in einer Nut (26) sitzt, die auf dem Umfang des Ansatzes (12) ausgenommen ist und insbesondere rechteckigen Querschnitt haben kann.

4. Tankstutzen nach Anspruch 1 oder 2, dadurch gekennzeichnet, daß der Dichtring (24) in einer radial inneren oder äußeren Ringnut an der Stirnfläche (50) des Ansatzes (12) aufgenommen ist.

5. Tankstutzen nach Anspruch 1 oder 2, dadurch gekennzeichnet, daß der Dichtring (24) in einer umlaufenden Einbuchtung (60) oder Ausbuchtung (56) der Metallhülse (14) sitzt.

6. Tankstutzen nach einem der Ansprüche 1 bis 5, dadurch gekennzeichnet, daß die Verbindung zwischen Metallhülse (14) und Kunststoffansatz - (12) lösbar oder unlösbar ist.

7. Tankstutzen nach einem der Ansprüche 1 bis 6, dadurch gekennzeichnet, daß die Metallhülse (14) mit einer oder mehreren Halteschraube(n) - (20) an dem Ansatz (12) festgeschraubt ist.

8. Tankstutzen nach einem der Ansprüche 1 bis 7, dadurch gekennzeichnet, daß die Metallhülse (14) als Gewindestutzen ausgebildet und mit einem Gewindeansatz des Tanks (10) verschraubbar ist.

9. Tankstutzen nach einem der Ansprüche 1 bis 8, dadurch gekennzeichnet, daß die Metallhülse (14) an dem Ansatz (12) festgeklemmt und/oder festgebördelt ist.

10. Tankstutzen nach einem der Ansprüche 1 bis 9, dadurch gekennzeichnet, daß mit der Metallhülse (14) ein radial nach innen oder außen vorstehender, vorzugsweise gleichfalls aus Metall bestehender Steg (42) starr verbunden, insbesondere verlötet oder verschweißt ist, der als Anschlag dienen und/oder den Dichtring (24) beaufschlagen kann.

11. Tankstutzen nach einem der Ansprüche 1 bis 10, dadurch gekennzeichnet, daß das freie Ende der Metallhülse (14) für einen Bajonett-Tankverschluß insbesondere nach DIN 73400 ausgelegt ist.

Figur 1

Figur 2

Figur 3

Figur 4

Figur 5

Figur 6

Figur 7

34

10

14

24

60

12

62

Figur 8

Figur 9

| **EINSCHLÄGIGE DOKUMENTE** | | | EP 86100480.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | <u>DE - A1 - 3 135 982</u> (DAIMLER-BENZ AG)<br><br>* Fig. 1,3 *<br><br>-- | 1-6, 9-11 | B 60 K 15/04 |
| X | <u>DE - A1 - 3 027 002</u> (VOLKSWAGEN-WERK AG)<br><br>* Anspruch 2 *<br><br>---- | 1-3,6, 9 | |

| | RECHERCHIERTE SACHGEBIETE (Int. Cl.4) |
|---|---|
| | B 60 K |

Der vorliegende Recherchenbericht wurde für alle Patentansprüche erstellt.

| Recherchenort | Abschlußdatum der Recherche | Prüfer |
|---|---|---|
| WIEN | 06-11-1986 | DENK |